**Europäisches Patentamt**

**European Patent Office**

**Office européen des brevets**

(19)

(11) Veröffentlichungsnummer: **0 200 803**
**A1**

(12) # EUROPÄISCHE PATENTANMELDUNG

(21) Anmeldenummer: **85105647.3**

(22) Anmeldetag: **08.05.85**

(51) Int. Cl.⁴: **A 23 D 3/00, A 23 D 3/02**

(43) Veröffentlichungstag der Anmeldung: **12.11.86**
**Patentblatt 86/46**

(84) Benannte Vertragsstaaten: **BE CH DE FR GB LI LU NL**

(71) Anmelder: **S.A. Excel Toy-Riont, B.P. 307, F-92003 Nanterre Cedex (FR)**

(72) Erfinder: **Lefebvre, Jacques, Dr., 14 Allée des Vergers, F-78100 St. Germain en Laye (FR)**
Erfinder: **Dizier, Jacques, Dipl.-Ing., Chemin des Mille Ecus, F-13190 Allauch (FR)**

(74) Vertreter: **UEXKÜLL & STOLBERG Patentanwälte, Beselerstrasse 4, D-2000 Hamburg 52 (DE)**

(54) **Fettmischung, Verfahren zu deren Herstellung, deren Verwendung und diese enthaltende Margarine.**

(57) Es wird ein Margarinefett beschrieben, das hinsichtlich seiner Eigenschaften in einfacher Weise an die jeweils vorgesehene Anwendung angepaßt werden kann, wobei der Einsatz von nur 2 Ölen möglich ist. Diese Fettmischung ist durch drei Komponenten gekennzeichnet, nämlich ein flüssiges Öl mit einem hohen Gehalt an Fettsäure mit 18 Kohlenstoffatomen, ein entsprechendes gehärtetes und umgeestertes Öl, das durch partielle, selektive und isomerisierende Hydrierung auf einen Schmelzpunkt von 38 bis 42 °C und anschließende ungelenkte Umesterung des Hydrierungsproduktes erhalten worden ist, und ein unter selektiven und isomerisierenden Bedingungen auf einen Schmelzpunkt von 50 bis 55° gehärtetes, palmitinsäurereiches Öl. Weiterhin werden ein Verfahren zur Herstellung dieser Fettmischung und deren Verwendung zur Herstellung von Margarine beschrieben.

## Fettmischung, Verfahren zu deren Herstellung, deren Verwendung und diese enthaltende Margarine

Die Erfindung betrifft eine zur Herstellung von Margarinen geeignete Fettmischung.

Margarinen finden heutzutage eine vielseitige Verwendung. Beispiele hierfür sind Tafelmargarine, die in Papier (Einwicklern) oder in Behältern verpackt sein kann, und Margarinen, die zur industriellen oder handwerklichen Herstellung von verschiedenen Getreide- bzw. Mehlprodukten dienen. Die den Margarinen zugrundeliegenden Fettmischungen müssen einer Vielzahl von Anforderungen genügen, die entweder allgemeiner Natur sind oder mit einer speziellen Anwendung der Margarine zusammenhängen. Zu der ersteren Gruppe gehört beispielsweise die Forderung, daß die bei der Verwendung von Fettmischungen hergestellten Margarinen eine beständige Struktur besitzen, lange ohne Geschmackseinbußen haltbar sind, leicht im Mund schmelzen und so gut wie möglich einen Frischeeindruck vermitteln. Weiterhin müssen sie ohne Schwierigkeiten in kontinuierlichen Herstellungsanlagen herstellbar und auf verschiedene Art und Weise verpackbar sein. Sie dürfen nicht ausölen, nicht nachhärten und sich bei der längerer Lagerung nicht in eine "sandige" Masse verwandeln.

Gegenüber diesen allgemeinen Anforderungen hängen die speziellen Anforderungen an die Margarine von deren jeweils vorgesehener Verwendung ab. So müssen Margarinen für Blätterteig oder dänisches Gebäck eine harte und plastische Konsistenz haben. Zur schnellen Abschätzung der Qualität einer solchen Margarine kann man sie zwischen der Handfläche

0200803

und den Fingern kneten. Eine gute Margarine ähnelt Knetmasse und darf nicht brüchig oder krümelig sein. Andere Margarinen für Hefeteig müssen weicher sein und plastisch bleiben, um in den Teig eingearbeitet zu werden, ohne daß das Öl während der Zubereitung ausgeschieden wird.

Es ist bekannt, daß die Eigenschaften von Margarinen bei vorgegebenem Herstellungsverfahren von der zugrundeliegenden Fettmischung abhängen. Die Eigenschaften der Fettmischung wiederum werden indirekt durch das Verhältnis der festen und flüssigen Anteile bei bestimmten Temperaturen innerhalb eines Temperaturintervalls ermittelt. Das jeweils als wichtig angesehene Temperaturintervall hängt von der vorgesehenen Anwendung der Margarine ab. Für streichfähige, in Behälter verpackte Tafelmargarinen umfaßt dieses Temperaturintervall den Bereich von 5 bis 25°C, während für in Einwickler verpackte Tafelmargarine und für Margarine für Hefeteig das Temperaturintervall von 12 bis 18°C und für Blätterteigmargarine das Temperaturintervall von 20 bis 30°C von Bedeutung sind.

Es wird verlangt, daß Tafelmargarinen und Hefeteigmargarinen bei einer Temperatur zwischen 30 und 35°C und vorzugsweise einer Temperatur von 32 bis 33°C vollständig geschmolzen sind. Die Margarinefette können nach der vorgesehenen Anwendung und den gewünschten Eigenschaften in etwa anhand der festen Fettanteile, ausgedrückt in % der fetten Phase und bestimmt durch die NMR-Methode, charakterisiert werden.

0200803

| | 5°C | 15°C | 20°C | 25°C | 30°C | 35°C |
|---|---|---|---|---|---|---|
| Tafelmargarine in Behältern | 20-30 | 15-20 | 10-15 | 6-10 | 2- 4 | - |
| Tafelmargarine in Einwicklern | 30-40 | 20-30 | 10-18 | 4-10 | 2- 6 | - |
| Hefeteigmargarine | 35-45 | 35-45 | 25-35 | 16-26 | 6-10 | 0- 3 |
| Blätterhefeteig-margarine (Croissants) | 50-65 | 40-55 | 30-45 | 20-35 | 10-25 | 3-10 |
| Blätterteig-margarine | 60-75 | 58-68 | 40-55 | 35-45 | 18-28 | 6-15 |

Die obigen Angaben stellen nur Beispiele dar, die sich je nach Jahreszeit, Klima und regionalen Gewohnheiten ändern können.

Für die Herstellung von in Bechern verpackten Margarinen, die nach Lagerung in Kühlschränken (3 bis 5°C) noch streichbar sind, verwendet man häufig Fett- und Ölmischungen, die ganz oder zumindest teilweise umgeestert worden sind. So sind umgeesterte Mischungen aus Palmöl oder Palmölfraktionen mit hohem Schmelzpunkt und wechselnden Anteilen Kokos- oder Palmkernöl schon lange als Fettkomponente für Margarine üblich. Statt Kokos- oder Palmkernöl kann man auch flüssige Pflanzenöle verwenden.

Nach der DE-AS 1 299 992 ist es möglich, eine Sonnenblumenmargarine herzustellen, indem man durch Hydrierung gehärtetes Sonnenblumenöl mit flüssigem Sonnenblumenöl umestert und dann das Umesterungsprodukt wiederum mit flüssigem Sonnenblumenöl verdünnt. Durch Einstellung des Härtungsgrades und der jeweiligen Anteile der verschiedenen Komponenten, gelingt es, eine in Becher verpackbare Tafelmargarine, die bei Kühlschranktemperatur leicht streichbar ist, oder eine in Papiereinwickler verpackbare Tafelmargarine zu erhalten. Das Verhältnis der festen und flüssigen Anteile im umgeesterten Produkt ist allerdings zu niedrig, um den Gehalt an festen Fetten auf
die Erfordernisse bei Backmargarinen einzustellen. Bei den
üblicherweise verwendeten Härtungsgraden wird die
Konsistenz der mit diesen umgeesterten Mischungen
erhaltenen Margarinen zu weich. Andererseits verliert die
Mischung bei Zusatz von zu viel gehärteten, nicht
umgeesterten Fetten ihre Widerstandsfähigkeit gegen
kristalline Veränderungen, die zu dem bekannten Phänomen
der "Sandigkeit" führen.

Durch Mitverwendung von höher gehärteten Ölen kann man zwar
die Konsistenz der unter Verwendung der oben genannten
Mischungen hergestellten Margarinen in dem jeweils in
Abhängigkeit vom vorgesehenen Gebrauch wichtigen Temperaturbereich in gewissem Umfang einstellen. Dies führt jedoch
dazu, daß diese Margarinen ihre guten Schmelzeigenschaften
und den frischen Geschmack verlieren. Die Schmelztemperatur
dieser Mischungen ist zu hoch.

Eine große Anzahl von verschiedenen Margarinen, die dazu
bestimmt sind, anders als in Bechern eingepackt zu werden,
bestehen aus Mischungen von natürlichen
Fetten wie Kokosnußöl, Palmkernöl und Palmöl
und durch Hydrierung gehärteten pflanzlichen Ölen und von
flüssigen Ölen. Die gehärteten Öle erhält man durch
partielle und selektive Hydrierung von flüssigem Öl, wobei
man die Hydrierung unter üblichen Bedingungen in Gegenwart
eines Nickelkatalysators durchführt.

Die erforderliche Strukturstabilität und insbesondere die
Eigenschaft, keine Ölphase auszuscheiden, sowie die
Eigenschaft, sich nicht in eine "sandige" Masse zu
verwandeln, kann aber nur durch eine Zusammensetzung der
Fettmischung sichergestellt werden, wie man sie bei
Verwendung einer großen Anzahl der angegebenen Bestandteile erhält. So zeigen einige gehärtete Öle wie z.B. gehärtetes Raps- und Sonnenblumenöl eine deutliche Tendenz, sich in eine "sandige" Masse zu verwandeln. Andere Öle wie Palmöl kristallisieren sehr langsam. Diese Nachteile schränken die Verwendbarkeit dieser Öle bei der Margarineherstellung ein und zwingen den Hersteller, über eine große Zahl von verwendbaren Komponenten verfügen zu müssen, um die verschiedenen Margarinen herstellen zu können.

Angesichts der oben erläuterten Probleme liegt der Erfindung die Aufgabe zugrunde, die geschilderten Nachteile zu beseitigen und die Herstellung eines Margarinefetts unter Verwendung von vorzugsweise nur zwei Ölen zu ermöglichen, wobei das erhaltene Margarinefett sich durch eine große Vielseitigkeit hinsichtlich seiner Anwendungsmöglichkeiten auszeichnet.

Zur Lösung dieser Aufgabe wird eine zur Herstellung von Margarinen geeignete Fettmischung vorgeschlagen, die gekennzeichnet ist durch die folgenden drei Komponenten:

a)  ein flüssiges Öl mit einem hohen Gehalt an Fettsäuren mit 18 Kohlenstoffatomen,

b)  ein gehärtetes und umgeestertes Öl, das durch partielle, selektive und isomerisierende Hydrierung eines Öls gemäß a) auf einen Schmelzpunkt von 38 bis 42°C und anschließende ungelenkte Umesterung des Hydrierungsproduktes erhalten worden ist, und

c)  ein unter selektiven und isomerisierenden Bedingungen auf einen Schmelzpunkt von 50 bis 55°C gehärtetes, palmitinsäurereiches Öl.

- 6 -

Gegenstand der Erfindung sind ferner ein Verfahren zur Herstellung dieser Fettmischung, die Verwendung dieser Fettmischung zur Herstellung von Margarine und Margarine, die unter Verwendung dieser Fettmischung hergestellt worden ist.

Zur Herstellung der erfindungsgemäßen Fettmischung geht man wie folgt vor:

1) Man hydriert ein flüssiges Öl mit einem hohen Gehalt an Fettsäuren mit 18 Kohlenstoffatomen wie Rapsöl, Sonnenblumenöl, Sojaöl, Weintraubenkernöl, Saffloröl, Maiskeimöl, Reiskleieöl, Erdnußöl, Sesamöl, Olivenöl und/oder Kapoköl in Gegenwart eines geschwefelten Nickelkatalysators bei einer Temperatur von 160 bis 200$^{\circ}$C und einem Wasserstoffdruck von 1 bis 10 bar auf einen Schmelzpunkt von 38 bis 42$^{\circ}$C. Der Stearinsäuregehalt des so erhaltenen gehärteten Fettes ist kleiner als 13 % und vorzugsweise kleiner als 12 % (z.B. zwischen 10 und 12 %).

2) Man unterwirft das gehärtete Öl einer ungelenkten Umesterung.

3) Man hydriert ein palmitinsäurereiches pflanzliches Öl oder Fett wie Palmöl oder Palmstearin mit einem Palmitinsäuregehalt von mehr als 25 % und vorzugsweise mehr als 45 % in Gegenwart eines geschwefelten Nickelkatalysators bei einer Temperatur von 160 bis 200$^{\circ}$C und einem Wasserstoffdruck von 1 bis 10 bar bis zum Erhalt eines gehärteten Fettes mit einem Schmelzpunkt von 50 bis 55$^{\circ}$C.

4) Man mischt das gehärtete und umgeesterte Öl mit einem flüssigen Öl, bei dem es sich um ein Öl mit einem hohen Gehalt an Fettsäuren mit 18 Kohlenstoffatomen wie Rapsöl, Sonnenblumenöl, Sojaöl, Weintraubenkernöl, Saffloröl, Maiskeimöl, Reiskleieöl, Erdnußöl, Sesamöl, Olivenöl und/oder Kapoköl handelt, und stellt das

0200803

Gemisch durch Zusatz eines kleinen Anteils des gehärteten palmitinsäurereichen Öls bzw. Fetts so ein, daß die für die herzustellende Margarine gewünschten Eigenschaften erhalten werden. Vorzugsweise wird als flüssiges Öl das gleiche Öl eingesetzt, das auch zur Herstellung des gehärteten und umgeesterten Öls verwendet worden ist. Auf diese Weise ist es möglich, aus nur zwei Ausgangsölen eine äußerst anpassungsfähige Fettmischung herzustellen.

Die erfindungsgemäße Fettmischung läßt sich in üblicher Weise zu Margarine verarbeiten. Da die hierfür erforderlichen Maßnahmen dem Fachmann ohne weiteres geläufig sind, braucht hierauf nicht näher eingegangen zu werden.

Das Wesen der Erfindung liegt darin, daß die erfindungsgemäße Fettmischung durch Variation der mengemäßigen Anteile der drei Komponenten so verändert werden kann, daß sie je nach Verwendungszweck der daraus herzustellenden Margarinen äußerst günstige Eigenschaften besitzt. Das Überraschende dabei ist, daß dies durch Verwendung von vorzugsweise nur zwei Ölen möglich ist. Mit anderen Worten ermöglicht die Erfindung eine erstaunliche Flexibilität bei der Herstellung unterschiedlicher Margarinen unter Verwendung einer sehr geringen Anzahl von Ausgangsölen, die jeweils nach Marktlage eingesetzt werden können.

Der bei der Hydrierung des flüssigen Öls mit einem hohen Gehalt an Fettsäuren mit 18 Kohlenstoffatomen (siehe Stufe 1) verwendete Katalysator wird entweder durch Einwirkung von Wasserstoff auf Nickelsulfide oder durch Kontakt von Schwefelwasserstoff mit einem selektiven Nickelkatalysator hergestellt. Die Hydrierung wird solange fortgesetzt, bis eine Jodzahl von 74 bis 80 erreicht ist. Auf diese Weise ist es möglich, einen Stearinsäuregehalt von weniger als 12% und einen Linolsäuregehalt von weniger als 7% zu erreichen. Im Fall von Raps- oder Sonnenblumenöl liegt der Monoensäuregehalt höher als 75%, wovon mehr als 60% Transisomere sind.

Die so hergestellten gehärteten Öle besitzen vorteilhafte Feststoffgehalte und ermöglichen scheinbar den Erhalt der verschiedenen Fettmischungen, die zur Herstellung diverser Margarinen benötigt werden. Leider sind diese gehärteten Öle in dieser Form jedoch für die Herstellung von Margarinen nicht geeignet. Wenn man nur diese gehärteten Öle zusammen mit flüssigen Ölen verwenden würde, würden die daraus hergestellten Margarinen zu hart werden und sich in eine brüchige und sandige Masse verwandeln. So ist beispielsweise eine Margarine, die man aus 80% gehärtetem Rapsöl und 20% flüssigem Rapsöl herstellt, wenig plastisch und wird nach vier Tagen bei $20^{\circ}$C pulverförmig.

Diese Schwierigkeiten können mit Hilfe der ungelenkten Umesterung vermieden werden. Hierunter versteht man bekanntlich eine Behandlung, bei der man dem vollständig getrockneten Öl einen Umesterungskatalysator wie pulverförmiges Natrium- oder Kaliumalkoholat, Alkalimetalle oder Legierungen von Alkalimetallen (z.B. Natrium-Kalium-Legierungen im Verhältnis 1:1) in Mengen von 0,02 bis 0,2% zugibt. Die Reaktion setzt unter Rühren ein, gewöhnlich bei einer Temperatur von 80 bis $100^{\circ}$C. Je nach Aktivität des Katalysators kann aber auch bei tieferen Temperaturen gearbeitet werden. Nach Beendigung der Umesterung wird der Katalysator durch Zusatz von Wasser inaktiviert und das erhaltene Produkt wird nachraffiniert. Man stellt fest, daß das umgeesterte Produkt nach der Kristallisation im Vergleich zu dem gehärteten aber nicht umgeesterten Produkt bei jeder Temperatur 2 bis 3% weniger Feststoffe enthält.

Auch die Härtung des palmitinsäurereichen Fettes in
Gegenwart eines geschwefelten Nickelkatalysators erfolgt
unter den bereits oben beschriebenen Bedingungen, bis ein
Produkt mit einem Schmelzpunkt von 50 bis 55°C erhalten
wird. Das gehärtete Öl soll weniger als 22% Stearinsäure
enthalten, während der Gehalt an Monoenfettsäuren in der
Regel mehr als 25% beträgt.

Sowohl die selektive Hydrierung unter die Isomerisierung
fördernden Bedingungen als auch die ungelenkte Umesterung
sind Verfahren, die jedem Fachmann geläufig sind, so daß
sich zusätzliche Erläuterungen erübrigen.

Wie bereits erwähnt, werden die erfindungsgemäßen
Fettmischungen so hergestellt, daß sie den allgemeinen an
Margarine zu stellenden Anforderungen und auch den
speziellen, von dem jeweils vorgesehenen Anwendungszweck
der Margarine abhängenden Anforderungen genügen. Dabei
werden die allgemeinen Anforderungen im wesentlichen durch
die Verwendung von zwei Komponenten, nämlich dem flüssigen
Öl und dem gehärteten und umgeesterten Öl, zufriedengestellt. Die Anpassung an die jeweiligen speziellen
Anforderungen und damit die erfindungsgemäße Verbesserung
erfolgt durch die Mitverwendung der dritten Komponente oder
besser gesagt durch die Verwendung der Kombination von
flüssigem Öl, gehärtetem und umgeestertem Öl und palmitinsäurereichem gehärteten Öl.

Während die erfindungsgemäßen drei Komponenten enthaltenden
Fettmischungen, die für in Becher zu verpackende Margarine
verwendet werden, bis zu 75 % flüssiges Öl enthalten
können, können entsprechende Fettmischungen mit nur zwei
Komponenten nur 65% flüssiges Öl enthalten. Dies macht
deutlich, daß die erfindungsgemäße Mischung aus drei
Komponenten vorteilhaft für die Herstellung von linolsäurereicher Diätmargarine ist.

Wenngleich ein wesentlicher Gesichtspunkt der Erfindung die Flexibilität des erfindungsgemäßen Margarinefetts, d.h. die Anpassungsfähigkeit an die Anforderungen der jeweils gewünschten Margarine, ist und diese Flexibilität im wesentlichen durch Veränderung der mengenmäßigen Anteile der drei Komponenten erreicht wird, kann ganz allgemein festgestellt werden, daß der Anteil des flüssigen Öls mit einem hohen Gehalt an Fettsäuren mit 18 Kohlenstoffatomen in der erfindungsgemäßen Fettmischung im allgemeinen 20 bis 75%, der Anteil des gehärteten und umgeesterten Öls 10 bis 75% und der Anteil des gehärteten palmitinsäurereichen Öls 3 bis 20% betragen. Eine für die Margarineherstellung ausgezeichnet geeignete Fettmischung gemäß der bereits erwähnten bevorzugten Ausführungsform der Erfindung (Einsatz von nur 2 Ölen) besteht dementsprechend aus etwa 70% Sonnenblumenöl, etwa 26% gehärtetem und umgeestertem Sonnenblumenöl und etwa 4% gehärtetem Palmöl oder Palmstearin.

Die Erfindung soll anhand der folgenden Beispiele näher erläutert werden.

Beispiel

18 t raffiniertes Sonnenblumenöl wurden unter einem Druck von 10 bis 20 mmHg in einem Hydrierungsautoklaven auf 180°C erhitzt. Dann wurden 80 kg geschwefelter Nickelkatalysator in Form einer Suspension in 500 l raffiniertem Sonnenblumenöl zugegeben. Der Katalysator war durch Einwirkung von Schwefelwasserstoff auf einen Nickelkatalysator erhalten worden. Anschließend wurde Wasserstoff unter einem Druck von 1 bar eingeleitet. Die Reaktion setzte ein, was zu einer Erhöhung der Temperatur im Autoklaven führte. Die Kühlung des Autoklaven mittels Kühlwasser wurde so

0200803

reguliert, daß die Hydrierungstemperatur zwischen 190 und 200°C lag. In regelmäßigen Abständen wurden Proben entnommen, deren Jodzahl nach der Hoffmann-Green-Methode bestimmt wurde. Nach einer Hydrierungszeit von 195 Minuten betrug die Jodzahl 75,7. Die Hydrierung wurde an diesem Punkte abgebrochen.

In der folgenden Aufstellung sind die Eigenschaften und die Verteilung der Fettsäuren im Ausgangsprodukt und im gehärteten Produkt angegeben:

|  | Ausgangs-produkt | gehärtetes Produkt |
|---|---|---|
| Palmitinsäure | 6,1% | 6,1% |
| Stearinsäure | 4,4% | 12,0% |
| Ölsäure | 22,2% | 14,5% |
| Elaidinsäure | - | 60,4% |
| Linolsäure | 66,0% | 5,7% |
| Andere | 1,3% | 1,3% |
| Schmelzpunkt | - | 38,5% |

Feststoffgehalt
| | |
|---|---|
| 10°C | 79,3% |
| 15°C | 74,2% |
| 20°C | 65,4% |
| 25°C | 49,9% |
| 30°C | 30,7% |
| 35°C | 12,3% |
| 40°C | 7,0% |
| 45°C | 0,9%. |

Nach Filtration und Nachraffination wurde das gehärtete Produkt in einen Umesterungsreaktor überführt. Das Produkt wurde eine Stunde bei 140°C unter einem absoluten Druck von 20 mmHg getrocknet und dann auf 80°C gekühlt. Unter atmosphärischem Druck wurden dann unter Rühren 10 kg

0200803

Natriummethylat zugegeben. Nach 30 Minuten war das
Reaktionsgemisch dunkelbraun geworden. Nach weiteren
30 Minuten wurde der Katalysator mit 250 l Wasser
inaktiviert. Das Produkt wurde gewaschen und zentrifugiert,
dann getrocknet, gebleicht und desodoriert.

Das so erhaltene Produkt besaß folgende Eigenschaften:

|  | Feststoffgehalt |
|---|---|
| $10^{O}C$ | 77,0% |
| $15^{O}C$ | 71,9% |
| $20^{O}C$ | 61,9% |
| $25^{O}C$ | 47,6% |
| $30^{O}C$ | 26,1% |
| $35^{O}C$ | 9,1% |
| $40^{O}C$ | 1,5% |

Das oben im Zusammenhang mit Sonnenblumenöl beschriebene
Härtungsverfahren wurde mit Palmöl unter den gleichen
Bedingungen wiederholt. Die Hydrierung wurde beendet, als
die Jodzahl 25,8 betrug. Das Härtungsprodukt besaß einen
Schmelzpunkt von $52^{O}C$. Die Eigenschaften des Ausgangsproduktes und des gehärteten Produktes sind in der folgenden
Aufstellung angegeben:

|  | Ausgangs-<br>produkt | Endprodukt<br>(gehärtet) |
|---|---|---|
| Laurinsäure | 0,7% | 0,7% |
| Myristinsäure | 1,3% | 1,3% |
| Palmitinsäure | 43,0% | 43,0% |
| Stearinsäure | 3,8% | 22,0% |
| Ölsäure | 42,2% | 6,3% |
| Elaidinsäure | - | 25,0% |
| Linolsäure | 8,2% | 0,9% |
| Andere | 0,8% | 0,8% |

|  | Feststoffgehalt |
|---|---|
| $10^{o}C$ | 95,7% |
| $15^{o}C$ | 95,1% |
| $20^{o}C$ | 92,3% |
| $25^{o}C$ | 86.0% |
| $30^{o}C$ | 73,0% |
| $35^{o}C$ | 58,1% |
| $40^{o}C$ | 39,9% |
| $45^{o}C$ | 22,6% |
| $50^{o}C$ | 4,1% |

Es wurden Mischungen aus zwei oder drei Komponenten hergestellt, wobei das in der oben beschriebenen Weise hergestellte gehärtete und umgeesterte Sonnenblumenöl und das entsprechende nicht gehärtete und nicht umgeesterte als Ausgangsmaterial dienende Sonnenblumenöl sowie das gehärtete Palmöl verwendet wurden. Die jeweilige Zusammensetzung und die physikalischen Eigenschaften der hergestellten Mischungen sind in der folgenden Tabelle wiedergegeben:

|  | 1 | 2 | 3 | 4 | 5 | 6 |
|---|---|---|---|---|---|---|
| Sonnen-blumenöl | 71 % | 67 % | 51 % | 40 % | 20 % | 10 % |
| gehärtetes, umgeestertes Sonnen-blumenöl | 23 % | 33 % | 39 % | 47 % | 61 % | 90 % |
| gehärtetes Palmöl | 6 % | – | 10 % | 13 % | 19 % | – |

Feststoffgehalt

(Fettphase)

| | 1 | 2 | 3 | 4 | 5 | 6 |
|---|---|---|---|---|---|---|
| $5^{o}C$ | 22,8% | 21,3% | 42,3% | 51,5% | 71,3% | 68,8% |
| $10^{o}C$ | 21,5% | 16,9% | 40,6% | 49,3% | 69,7% | 68,6% |
| $15^{o}C$ | 16,3% | 14,1% | 33,2% | 42,1% | 63,2% | 62,3% |
| $20^{o}C$ | 10,4% | 9,4% | 23,2% | 31,2% | 50,9% | 49,7% |
| $25^{o}C$ | 5,9% | 5,9% | 15,8% | 21,9% | 40,9% | 39,1% |
| $30^{o}C$ | 2,3% | 2,3% | 7,6% | 11,4% | 24,4% | 22,6% |
| $35^{o}C$ | | | 1,8% | 3,1% | 10,8% | 9,3% |
| $40^{o}C$ | | | | | 2,2% | |

1   in Becher verpackte Margarine

2   ebenso

3   Margarine für Kekse

4   Blätterteigmargarine

5   ebenso

6   ebenso

Um die Gebrauchseigenschaften zu vergleichen, wurden die Margarinen 1 bis 6 in herkömmlicher Weise unter Verwendung der Fettmischungen 1 bis 6 hergestellt und untereinander oder mit Testmargarine guter Qualität verglichen. Die den Margarinen zugeordneten Zahlen entsprechen dabei den Zahlen der jeweils verwendeten Fettmischungen.

Die Margarinen 1 und 2 wurden beim Gebrauch und im Geschmack als gleichwertig beurteilt. Die Fettmischung 1 enthielt aber mehr als 45% essentielle Linolsäure.

Die Margarine 3 wurde als einer guten Vergleichsmargarine gleichwertig beurteilt, was sowohl für den Gebrauch als auch für den Geschmack galt.

Die Margarinen 4 und 5 wurden im Geschmack gleichwertig mit Margarine 6 beurteilt, besaßen aber bessere Anwendungseigenschaften.

Die in der Beschreibung, dem Beispiel und den Patentansprüchen angegebenen Schmelzpunkte sind Steigschmelzpunkte (vgl. DGF Einheitsmethoden C-IV 3a.(52)).

0200803

## Patentansprüche

1. Zur Herstellung von Margarine geeignete Fettmischung, gekennzeichnet durch die folgenden drei Komponenten:
   a) ein flüssiges Öl mit einem hohen Gehalt an Fettsäuren mit 18 Kohlenstoffatomen,
   b) ein gehärtetes und umgeestertes Öl, das durch partielle, selektive und isomerisierende Hydrierung eines Öls gemäß a) auf einen Schmelzpunkt von 38 bis 42°C und anschließende ungelenkte Umesterung des Hydrierungsprodukts erhalten worden ist, und
   c) ein unter selektiven und isomerisierenden Bedingungen auf einen Schmelzpunkt von 50 bis 55°C gehärtetes palmitinsäurereiches Öl.

2. Fettmischung nach Anspruch 1, dadurch gekennzeichnet, daß das flüssige Öl mit einem hohen Gehalt an Fettsäuren mit 18 Kohlenstoffatomen Rapsöl, Sonnenblumenöl, Sojaöl, Weintraubenkernöl, Saffloröl, Maiskeimöl, Reiskleieöl, Erdnußöl, Sesamöl, Olivenöl, Kapoköl oder eine Mischung von 2 oder mehreren dieser Öle ist.

3. Fettmischung nach Anspruch 1 oder 2, dadurch gekennzeichnet, daß das gehärtete und umgeesterte Öl gemäß b) aus demselben flüssigen Öl hergestellt worden ist, das als flüssiges Öl gemäß a) in der Fettmischung vorhanden ist.

4. Fettmischung nach Anspruch 3, dadurch gekennzeichnet, daß das flüssige Öl gemäß a) und für die Herstellung von b) Sonnenblumenöl ist.

5. Fettmischung nach einem der Ansprüche 1 bis 4, dadurch gekennzeichnet, daß das palmitinsäurereiche Öl gemäß c) Palmöl oder Palmölstearin ist.

6. Fettmischung nach einem der Ansprüche 1 bis 5, dadurch gekennzeichnet, daß sie 20 bis 75% flüssiges Öl a), 10 bis 75% gehärtetes und umgeestertes Öl b) und 3 bis 20% gehärtetes palmitinsäurereiches Öl c) enthält.

7. Verfahren zur Herstellung einer Fettmischung gemäß einem der Ansprüche 1 bis 6, dadurch gekennzeichnet, daß man

   1. ein flüssiges Öl mit einem hohen Gehalt an Fettsäuren mit 18 Kohlenstoffatomen selektiv unter die Isomerisierung fördernden Bedingungen auf einen Schmelzpunkt von 38 bis 42$^{o}$C hydriert und anschließend ungelenkt umestert,

   2. ein palmitinsäurereiches Öl unter den gleichen Bedingungen wie in Stufe 1. auf einen Schmelzpunkt von 50 bis 55$^{o}$C hydriert und

   3. ein flüssiges Öl mit einem hohen Gehalt an Fettsäuren mit 18 Kohlenstoffatomen, das gehärtete und umgeesterte Öl aus Stufe 1. und das gehärtete palmitinsäurereiche Öl aus Stufe 2. mischt.

8. Verfahren nach Anspruch 7, dadurch gekennzeichnet, daß man die Hydrierung in den Stufen 1. und 2. in Gegenwart eines geschwefelten Nickelkatalysators bei 160 bis 200$^{o}$C und einem Wasserstoffdruck von 1 bis 10 bar und die ungelenkte Umesterung in Stufe 1. bei einer Temperatur von 60 bis 100$^{o}$C in Gegenwart eines alkalischen Katalysators durchführt.

0200803

9.  Verwendung der Fettmischung gemäß einem der Ansprüche
    1 bis 6 zur Herstellung von Margarine.

10. Margarine, dadurch gekennzeichnet, daß sie als
    Fettphase eine Fettmischung gemäß einem der Ansprüche
    1 bis 6 enthält.

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-1 562 284  (UNILEVER)<br><br>* Anspruch A; Beispiel 2 * | 1-6,9, 10 | A 23 D   3/00<br>A 23 D   3/02 |
| A | US-A-2 996 388  (D.S. LINDSAY)<br><br>* Ansprüche 1,3; Tabelle 1 * | 1-6,9, 10 | |

RECHERCHIERTE SACHGEBIETE (Int. Cl.4)

A 23 D

Der vorliegende Recherchenbericht wurde für alle Patentansprüche erstellt.

| Recherchenort<br>DEN HAAG | Abschlußdatum der Recherche<br>29-01-1986 | Prüfer<br>PEETERS J.C. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein- stimmendes Dokument

EPA Form 1503 03 82